Europäisches Patentamt

European Patent Office

Office européen des brevets

(19)

(11) Veröffentlichungsnummer : **0 152 774**
**B1**

(12) **EUROPÄISCHE PATENTSCHRIFT**

(45) Veröffentlichungstag der Patentschrift :
28.03.90

(21) Anmeldenummer : 85100545.4

(22) Anmeldetag : 19.01.85

(51) Int. Cl.⁵ : **F 16 B   7/14, A 47 F   5/06**

(54) Teleskopsäule mit drehbarer Auszugstange.

(30) Priorität : 10.02.84 CH 659/84

(43) Veröffentlichungstag der Anmeldung :
28.08.85 Patentblatt 85/35

(45) Bekanntmachung des Hinweises auf die Patenter-
teilung : 28.03.90 Patentblatt 90/13

(84) Benannte Vertragsstaaten :
AT DE FR GB NL

(56) Entgegenhaltungen :
GB--A--   201 344
US--A-- 3 506 234
US--A-- 3 862 735

(73) Patentinhaber : **Fehlbaum & Co.**
**Unterdorfstrasse 21**
**CH-4143 Dornach (CH)**

(72) Erfinder : **Steible, Pierre**
**27, rue de Belfort**
**F-68300 Village Neuf (FR)**

(74) Vertreter : **Gehrig, Peter et al**
**A. Braun, Braun, Héritier, Eschmann AG Holbeins-**
**trasse 36-38**
**CH-4051 Basel (CH)**

## Beschreibung

Die Erfindung bezieht sich auf eine Teleskopsäule mit einer drehbaren Auszugstange nach dem Oberbegriff des Patentanspruchs 1.

Es ist bekannt, für die Präsentation von Waren, insbesondere Konfektionskleidungsstücke und dergleichen Objekte Ständer zu verwenden, die am untern Ende einer Rohrsäule eine gegebenenfalls mit Rollen versehene Fussanordnung aufweisen. Im Innern der Rohrsäule ist eine teleskopisch ausfahrbare Auszugstange angeordnet, auf deren oberes Ende eine Traganordnung, z. B. ein oder mehrere Ausleger, ein Tragring oder Tragarme aufgesetzt sind. Die Auszugstange ist in der Rohrsäule drehbar gelagert und durch eine Höhenwähleinrichtung in ihrer Höhenlage fixierbar. Letzteres kann sowohl durch eine Lochindexiereinrichtung als auch durch ein Ringspannelement erzielt werden, wobei die Auszugstange und die Rohrsäule über die Höhenwähleinrichtung oder eine Feststell- und Drehlagerung miteinander gekuppelt sind.

Um einerseits die Drehbewegung der Auszugstange in der Rohrsäule zu ermöglichen, und andererseits die Beschädigung der Stangenoberfläche minimal zu halten, musste die Feststell- und Drehlagerung mit reichlich Spiel sowohl gegenüber der Rohrsäule als auch gegenüber der Auszugstange versehen sein. Dies hatte zur Folge, dass die Auszugstange nicht nur im stationären Zustand, sondern auch beim Drehen in Seitwärtslage zur Rohrsäule gelangen konnte. Dies ergab jedoch einerseits ein unbefriedigendes Aussehen der Säulenkombination, und andererseits ein unstabiles Verhalten beim Drehen der Auszugstange.

Aufgabe der Erfindung war daher eine Teleskopsäule mit einer Feststell- und Drehlagerung zu schaffen, welche die Auszugstange in höhenfixierten Zustand praktisch spielfrei in der Rohrsäule zentriert, um deren seitliches Ausschlagen aus der Axialrichtung der Rohrsäule zu eliminieren.

Die Lösung dieser Aufgabe geht aus dem Patentanspruch 1 hervor. Ausführungsformen davon sind in den abhängigen Ansprüchen 2 bis 7 definiert.

Ein Ausführungsbeispiel der Erfindung ist nachstehend anhand der Zeichnung erläutert. Darin zeigt :

Fig. 1 eine Teleskopsäule im Seitenriss, teilweise geschnitten,

Fig. 2 eine Ausführungsform der Feststell- und Drehlagerung im Längsschnitt und in grösserem Massstab,

Fig. 3 die Spann-Konushülse aus der Feststell- und Drehlagerung nach Fig. 2 in Seitenansicht und auf die Auszugstange aufgesetzt, und

Fig. 4 einen Schnitt nach der Ebene IV-IV in Fig. 2.

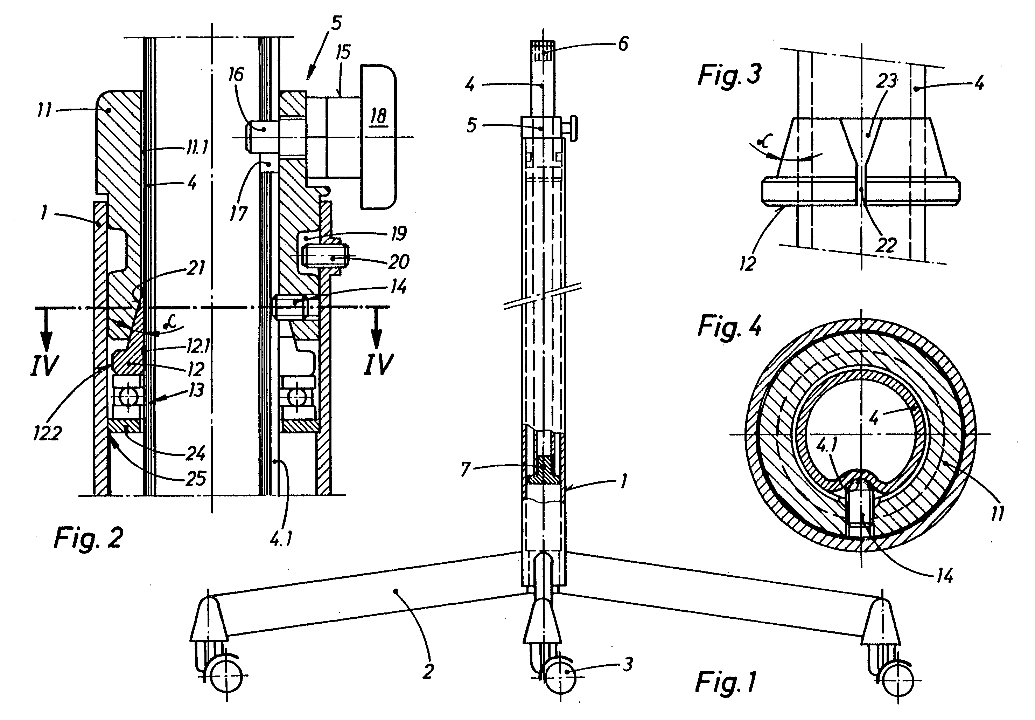

Die Teleskopsäule nach Fig. 1 besteht im wesentlichen aus einer Rohrsäule 1, einer Fussanordnung 2 in der Form eines mit Rollen 3 versehenen Fusssterns, einer in der Rohrsäule 1 drehbar gelagerten Auszugstange 4, und einem Feststell- und Drehlagerungsteil 5, das am obern Ende der Rohrsäule 1 zwischen dieser und die Auszugstange 4 angeordnet ist. Letztere ist an ihrem äussern/obern Ende mit Anschlussmitteln 6 zur Befestigung von (nicht gezeigten) Tragelementen oder dergleichen, und an ihrem innern/untern Ende mit einem Zentrierzapfen 7 versehen, welcher das untere Stangenende innerhalb der Rohrsäule 1 dreh- und längsverschiebbar führt. Insgesamt bilden somit der obenliegende Feststell- und Drehlagerungsteil 5 und der Zentrierzapfen 7 die Drehlagerung der Auszugstange 4 in der Rohrsäule 1. Der Zentrierzapfen 7 besteht vorteilhaft aus einem abriebfesten, selbstschmierenden Kunststoff und ist strammsitzend in das untere Stangenende eingesetzt. An seiner Stelle kann auch eine (nicht gezeigte) Manschette verwendet werden, die fest auf die Stangenoberfläche aufgezogen ist und den Abstand zwischen letzterer und der Innenwand der Rohrsäule 1 überbrückt.

Das Feststell- und Drehlagerungsteil 5 ist in grösserem Massstab in Fig. 2 gezeigt. Es besteht im wesentlichen aus einer Lagerbuchse 11, einer Konushülse 12, und einem Stützlager 13. Die Lagerbuchse 11 sitzt mit geringem Spiel drehbar im Innern der Rohrsäule 1 und umgreift mit ihrer Bohrungswand 11.1 die Auszugstange 4, welche in der Lagerbuchse 11 längsverschiebbar gehalten ist. Die Beschränkung auf Längsverschiebbarkeit der Auszugstange 4 ergibt sich gemäss den Fig. 2 und 4 durch den Eingriff einer in der Lagerbuchse 11 sitzenden Stellschraube 14, die in eine auf der Aussenseite der Auszugstange 4 längslaufende Führungsnute 4.1 eingreift.

Die Lagerbuchse 11 trägt weiterhin einen Kupplungs- bzw. Stellmechanismus in der Form einer Bolzen-Einschnappvorrichtung 15 mit einem federbelasteten Stellbolzen 16, der in vorzugsweise auf die Führungsnute 4.1 ausgerichtete Indexieröffnungen 17 einzugreifen bestimmt ist. Diese Oeffnungen 17 sind in etwa gleichen Abständen längs der Auszugstange 4 zwecks Höhenfixierung derselben relativ zur Rohrsäule 1 angebracht. Der Stellbolzen 16 ist mittels eines Betätigungsknopfes 18 aus der Oeffnung 17 herausziehbar, um die Auszugstange 4 freizugeben. Unbeabsichtigtes Herausheben der Lagerbuchse 11 aus der Rohrsäule 1 ist durch eine Ringsperre, bestehend aus einer am Buchsenkörper angebrachten peripher umlaufenden Sperrnute 19 und einem in der Wand der Rohrsäule 1 eingeschraubten Sperrbolzen 20, verhindert. Zur Erzielung einer beschränkten Längsbeweglichkeit der Lagerbuchse 11 in der Rohrsäule 1 ist die Sperrnute 19 etwa 1,5 ÷ 2 mal so breit wie der Durchmesser des in sie eingreifenden Sperrbolzens 20.

Am untern Ende der Lagerbuchse 11 ist eine nach aussen bzw. unten weiter werdende Innenkonusfläche 21 eingeformt, deren Neigungswinkel $\alpha$ zur Konusachse im Bereich von 10-20° liegt und vorzugsweise etwa 15° beträgt. Diese Konusfläche umgreift die kongruente Aussenfläche der Konushülse 12, deren zylindrische Innenwand 12.1 satt auf die Oberfläche der Auszugstange 4 drängbar und deren Körper durch einen Schlitz 22 (Fig. 3) aufgetrennt und somit in Umfangsrichtung federnd gemacht ist. Der Schlitz 22 liegt wie gezeigt zweckmässig in einer zur Konus-Längsachse parallelen Ebene, kann aber auch schräg dazu angebracht sein. Der Neigungswinkel α der Konusflächen an der Lagerbuchse 11 (und gleicherweise gemäss Fig. 3 auch an der Konushülse 12) ist in Abhängigkeit von den verwendeten Materialien so gewählt, dass zwar eine optimale Klemmkraft zwischen Konushülse und Auszugstange 4 erzielbar ist, anderseits aber ein unproblematisches Lösen des Konusflächeneingriffs sichergestellt ist) sobald der Vertikalandruck auf die Lagerbuchse 11 entfällt. Der Winkel α = 15° wurde für eine Materialpaarung Al für die Lagerbuchse 11 und « Nylon » für die Konushülse 12 gefunden.

Wenn bei beschränkter Bauhöhe der Lagerbuchse 11 eine Anordnung der Stellschraube 14 im Bereich der Konusfläche 21 notwendig ist (wie in Fig. 2 gezeigt), kann der Schlitz 22 auf einem Teil seiner Länge durch eine zusätzliche Ausnehmung 23 so verbreitert werden, dass die Stellschraube 14 ohne Behinderung der Bewegbarkeit der Konushülse 12, ihre Aufgabe erfüllen kann.

Die Konushülse 12 weist an ihrem in Gebrauchsstellung untern Ende einen Stützkragen 12.2 zur Ausbildung einer Versteifungszone auf, die einesteils die erforderliche Stabilität der Konushülse 12 sichert, und anderseits eine zuverlässige Auflage auf dem Stützlager 13 schafft. Letzteres besteht zweckmässig aus einen Axialkugellager, das auf einem Tragring 24 aufliegt, der seinerseits an einer Schulter 25 im Innern der Rohrsäule 1 abgestützt ist.

Will man die Auszugstange 4 aus einer ersten in eine bestimmte zweite Höhenbeziehung zur Rohrsäule 1 bringen, so hebt man zunächst die Auszugstange 4 etwas an, um den Stellbolzen 16 vom vertikalen Auflagedruck zu entlasten. Durch die früher erwähnte beschränkte Längsbeweglichkeit der Lagerbuchse 11 in der Rohrsäule 1 resultiert beim primären Anheben der Auszugstange 4 sofort eine Lockerung des Konusflächenandrucks zwischen der Lagerbuchse 11 und der Konushülse 12. Damit entfällt ein allfälliger Sperreingriff zwischen diesen beiden Bauteilen. Durch Auswärtsziehen des Betätigungsknopfes 18 wird hierauf der Sperrbolzen 16 aus der Oeffnung 17 herausbewegt. Die Auszugstange ist nun frei längsbeweglich und wird sodann in jene Höhenlage gebracht, in der eine weitere Oeffnung 17 nächst der gewünschten Auszugstellung auf den Stellbolzen 16 passt. Nach Einschnappen des Stellbolzens 16 in die « neue » Oeffnung 17 wird die Auszugstange 4 losgelassen, wodurch sie auf der Oberseite des Stellbolzens 16 anschlägt. Die beschränkt längsbewegliche Lagerbuchse 11 läuft eine geringe Wegstrecke mit abwärts, bis der Konusflächeneingriff zwischen den Bauteilen 11 und 12 stattgefunden hat, und die Konushülse 12 nun ihrerseits auf dem Stützlager 13 aufsitzt.

Die umfangsgefederte Konushülse 12, die zweckmässig aus Kunststoff gefertigt ist, stellt sicher, dass zwischen der Auszugstange 4 und der Lagerbuchse 11 eine strammsitzende Verbindung besteht. Die Lagerbuchse 11 ist samt der an sie angeschlossenen Auszugstange 4 vom Stützlager 13 getragen. Eine Seitwärtsauslenkung der Auszugstange 4 aus der Vertikalen ist somit nur noch nach Massgabe des engen Spiels zwischen der Lagerbuchse 11 und der Rohrsäule 1 möglich. Weil die Konushülse 12 wegen ihrer Umfangsfederung praktisch immer auf der Oberfläche der Auszugstange 4 aufliegt und ferner die Lagerbuchse 11 unter Schwerkrafteinfluss stets die Konushülse 12 kontaktiert, zentriert letztere auch beim Höhenstellungswechsel die Auszugstange 4 innerhalb der Lagerbuchse 11. Durch die aus Kunststoff gefertigte Konushülse 12 kann somit weiterhin ein wirksamer Schutz gegen Oberflächenkratzer an der Auszugstange 4 erreicht werden.

## Patentansprüche

1. Teleskopsäule mit einer drehbaren, im Innern einer Rohrsäule (1) angeordneten Auszugstange (4), die mittels einem als Höhenwähleinrichtung gestalteten relativ zur Rohrsäule (1) mit drehbaren Feststell- und Drehlagerungsteil (5) in ihrer Höhenlage gegenüber der Rohrsäule (1) fixierbar ist, dadurch gekennzeichnet, dass das Feststell- und Drehlagerungsteil (5) umfasst :
   eine im obern Endbereich der Rohrsäule (1) drehbar und beschränkt längsverschiebbar angeordnete Lagerbuchse (11) mit einem die Lagerbuchse (11) und die Auszugstange (4) miteinander lösbar kuppelnden Stellmechanismus (15),
   eine Auszugstange (4) im Innern der Lagerbuchse (11) zentrierende Konushülse (12), und
   eine Lagerbuchse (11) über die Konushülse (12) an der Rohrsäule (1) abstützende Axiallageranordnung (13, 24).

2. Teleskopsäule nach Patentanspruch 1, dadurch gekennzeichnet, dass der Stellmechanismus einen mit Höhenindexieröffnungen (17) an der Auszugstange (4) in Eingriff bringbaren Stellbolzen (16) einer Bolzen-Einschnappvorrichtung (15) aufweist.

3. Teleskopsäule nach Patentanspruch 1, dadurch gekennzeichnet, dass die Bohrungswand (11.1) der Lagerbuchse (11) an ihrem untern Ende in eine die Konushülse (12) aufnehmende Konusfläche (21) ausmündet, deren Neigung zur Auszugstangenlängsachse mit der korrespondierenden Konusflächenneigung der Konushülse (12) im wesentlichen übereinstimmt.

4. Teleskopsäule nach Anspruch 3, dadurch gekennzeichnet, dass die Konushülse (11) durch einen Axialschlitz (22) aufgetrennt ist und die Auszugstange (4) federnd umgreift.

5. Teleskopsäule nach Anspruch 4, dadurch gekennzeichnet, dass die Konushülse (11) aus Kunststoff besteht.

6. Teleskopsäule nach einem der Ansprüche 1 bis 5, dadurch gekennzeichnet, dass die Lagerbuchse (11) durch eine Ringsperre, bestehend aus einer peripher an der Lagerbuchse (11) umlaufenden Ringnut (19) und einem in der Wand der Rohrsäule (1) verankerten Sperrbolzen (20) in der Rohrsäule (1) festgehalten ist, wobei die Breite der Ringnut (19) etwa dem 1,5-2-fachen Durchmesser des in sie eingreifenden Sperrbolzens (20) entspricht, um eine beschränkte Längsbeweglichkeit der Lagerbüchse (11) in der Rohrsäule (1) zu erzielen.

7. Teleskopsäule nach Anspruch 3, dadurch gekennzeichnet, dass der Neigungswinkel (α) der Konusflächen zur Auszugstangenlängsachse 10-20° beträgt.

## Claims

1. Telescopic pillar with a rotatable extension rod (4) which is positioned inside a tubular column (1) and which, by means of a locking and pivot bearing unit (5) designed as a height adjustment means and capable of rotating together with the rod, can be secured at the required level in relation to the tubular column (1), characterized by the fact that the locking and pivot bearing unit (5) comprises :

a bearing bush (11) rotatable and to some extent longitudinally displaceable in the upper terminal zone of the tubular column (1) and having an adjusting mechanism (15) by which the bearing bush (11) and the extension rod (4) are releasably coupled together,

a conical sleeve (12) which centres the extension rod (4) in the interior of the bearing bush (11), and

an axial bearing system (13, 24) by which the bearing bush (11) is supported on the tubular column (1) via the conical sleeve (12).

2. Telescopic pillar in accordance with Patent Claim 1, characterized by the fact that, the adjusting mechanism is provided with an adjusting bolt (16) belonging to a bolt engagement device (15) and capable of being caused to engage height index apertures (17) on the extension rod (4).

3. Telescopic pillar in accordance with Patent Claim 1, characterized by the fact that the wall (11.1) of the boring of the bearing bush (11) terminates at its lower end in a cone surface (21) which accommodates the conical sleeve (12) and of which the angle of inclination in respect of the longitudinal axis of the extension rod largely coincides with the corresponding angle of inclination of the cone surface of the conical sleeve (12).

4. Telescopic pillar in accordance with Claim 3, characterized by the fact that the conical sleeve (11) is subdivided by an axial slit (22) and resiliently surrounds the extension rod (4).

5. Telescopic pillar in accordance with Claim 4, characterized by the fact that the conical sleeve (11) is made of plastic.

6. Telescopic pillar in accordance with one of claims 1-5, characterized by the fact that the bearing bush (11) is secured in the tubular column (1) by an annular locking system consisting of an annular groove (19) provided around the periphery of the bearing bush (11) and of a locking bolt (20) secured in the wall of the said column (1), the width of the annular groove (19) being about 1.5 to 2 times the diameter of the locking bolt (2) engaging it, in order to ensure limited longitudinal mobility of the bearing bush (11) in the tubular column (1).

7. Telescopic column in accordance with claim 3, characterized by the fact that the angle of inclination (α) of the cone surfaces in relation to the longitudinal axis of the tension rod amounts to 10°-20°.

## Revendications

1. Colonne télescopique munie d'une rallonge rotative (4) qui est logée à l'intérieur d'une colonne tubulaire (1) et peut être bloquée à demeure, dans sa position en hauteur par rapport à la colonne tubulaire (1), au moyen d'une pièce (5) d'arrêt et de montage rotatif réalisée sous la forme d'un dispositif sélecteur de hauteurs, et pouvant tourner conjointement à la colonne tubulaire (1), caractérisée par le fait que la pièce (5) d'arrêt et de montage rotatif comprend :

une douille de portée (11) disposée, dans la région extrême supérieure de la colonne tubulaire (1), avec faculté de rotation et de coulissement longitudinal limité, avec un mécanisme de réglage (15) qui accouple l'une à l'autre, de manière libérable, la douille de portée (11) et la rallonge (4),

un coussinet tronconique (12), centrant la rallonge (4) à l'intérieur de la douille de portée (11), et

un dispositif (13, 24) de montage axial soutenant la douille de portée (11), sur la colonne tubulaire (1), par l'intermédiaire du coussinet tronconique (12).

2. Colonne télescopique selon la revendication 1, caractérisée par le fait que le mécanisme de réglage présente une cheville de réglage (16) d'un dispositif d'encliquetage (15) à cheville, pouvant être mise en prise avec des orifices (17) de consignation en hauteur pratiqués sur la rallonge (4).

3. Colonne télescopique selon la revendication 1, caractérisée par le fait que la paroi (11.1) du canal de la douille de portée (11) s'achève, à son extrémité inférieure, par une surface tronconique (21) qui reçoit le coussinet tronconique (12) et dont l'inclinaison, par rapport à l'axe longitudinal de la rallonge, coïncide sensiblement avec l'inclinaison correspondante de la surface tronconique dudit coussinet tronconique (12).

4. Colonne télescopique selon la revendication 3, caractérisée par le fait que le coussinet tronconique (11) est scindé par une fente axiale (22), et ceinture élastiquement la rallonge (4).

**5.** Colonne télescopique selon la revendication 4, caractérisée par le fait que le coussinet tronconique (11) consiste en une matière plastique.

**6.** Colonne télescopique selon l'une des revendications 1 à 5, caractérisée par le fait que la douille de portée (11) est fermement retenue, dans la colonne tubulaire (1), par l'intermédiaire d'un verrou annulaire comprenant une rainure annulaire (19) ménagée périphériquement sur la douille de portée (11), ainsi qu'un tenon de verrouillage (20) ancré dans la paroi de la colonne tubulaire (1), la largeur de la rainure annulaire (19) correspondant sensiblement à 1,5-2 fois le diamètre du tenon de verrouillage (20) qui s'y engage, de façon à obtenir une mobilité longitudinale limitée de la douille de portée (11) dans la colonne tubulaire (1).

**7.** Colonne télescopique selon la revendication 3, caractérisée par le fait que l'angle d'inclinaison (α) des surfaces tronconiques mesure 10-20° par rapport à l'axe longitudinal de la rallonge.

Fig. 2

Fig. 3

Fig. 4

Fig. 1

EP 0 152 774 B1